(19) Europäisches Patentamt

European Patent Office

Office européen des brevets

(11) EP 2 360 859 B1

(12) **EUROPEAN PATENT SPECIFICATION**

(45) Date of publication and mention
of the grant of the patent:
**22.01.2014 Bulletin 2014/04**

(21) Application number: **09809201.8**

(22) Date of filing: **06.07.2009**

(51) Int Cl.:
***H04B 10/69*** *(2013.01)*

(86) International application number:
**PCT/CN2009/072631**

(87) International publication number:
**WO 2010/022616 (04.03.2010 Gazette 2010/09)**

(54) **AN ELECTRICAL EQUALIZING PROCESSING METHOD AND APPARATUS FOR OPTICAL SIGNAL AND AN OPTICAL FIBER COMMUNICATION SYSTEM**

ELEKTRISCHES ENTZERRUNGSVERFAHREN UND GERÄT FÜR OPTISCHE SIGNALE UND GLASFASERKOMMUNIKATIONSSYSTEM

PROCÉDÉ ET APPAREIL DE TRAITEMENT D ÉGALISATION ÉLECTRIQUE POUR UN SIGNAL OPTIQUE ET SYSTÈME DE COMMUNICATION PAR FIBRES OPTIQUES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.08.2008 CN 200810141779**

(43) Date of publication of application:
**24.08.2011 Bulletin 2011/34**

(73) Proprietors:
• **Huawei Technologies Co., Ltd.**
**Longgang District, Shenzhen**
**Guangdong 518129 (CN)**
• **Peking University**
**Beijing 100871 (CN)**

(72) Inventors:
• **LI, Ming**
**Beijing 100871 (CN)**
• **ZHANG, Fan**
**Beijing 100871 (CN)**
• **CHEN, Zhangyuan**
**Beijing 100871 (CN)**
• **XU, Anshi**
**Beijing 100871 (CN)**
• **LI, Liangchuan**
**Guangdong 518129 (CN)**

(74) Representative: **Pfenning, Meinig & Partner GbR**
**Patent- und Rechtsanwälte**
**Theresienhöhe 13**
**80339 München (DE)**

(56) References cited:
**CN-A- 1 240 944      CN-A- 101 039 152**
**US-A1- 2007 133 719   US-A1- 2007 147 850**
**US-A1- 2007 206 954   US-A1- 2007 274 628**
**US-A1- 2007 286 612**

• **BULOW H ET AL: "Electronic Dispersion Compensation", JOURNAL OF LIGHTWAVE TECHNOLOGY, IEEE SERVICE CENTER, NEW YORK, NY, US, vol. 26, no. 1, 1 January 2008 (2008-01-01), pages 158-167, XP011204207, ISSN: 0733-8724**
• **TANAKA Y ET AL: "Optical multi-wavelength PPM for high data rate transmission on indoor channels", PERSONAL, INDOOR AND MOBILE RADIO COMMUNICATIONS, 1997. WAVES OF THE Y EAR 2000. PIMRC '97., THE 8TH IEEE INTERNATIONAL SYMPOSIUM ON HELSINKI, FINLAND 1-4 SEPT. 1997, NEW YORK, NY, USA, IEEE, US, vol. 3, 1 September 1997 (1997-09-01), pages 979-983, XP010247594, DOI: 10.1109/PIMRC.1997.627032 ISBN: 978-0-7803-3871-5**

**Description**

**FIELD OF THE TECHNOLOGY**

The present invention relates to the field of communications technology, and more particularly to an electrical equalizing processing method and device for optical signal and an optical fiber communication system.

**BACKGROUND OF THE INVENTION**

Optical fiber communications technology has become one of the main backbones of modem communication, and plays an important role in modem telecommunication network. Its rapid development in recent years and wide application areas are rare in communication history, and the optical fiber communication technology is an important label of the world's new technological revolution and is a main delivery tool for all kinds of information in future information society.

Dispersion is an important factor which affects the performance of an optical communication system. Although the dispersion can be compensated in an optical domain through a dispersion compensation fiber, the dispersion of optical signals is very difficult to be fully compensated through the dispersion compensation fiber, because 1) it is very difficult for the dispersion compensation fiber to precisely compensate the dispersion of the optical signals on each channel in a wavelength division multiplexing system; 2) in an  optical fiber communication network, dynamic routing makes accumulated dispersion of the optical signals ever-changing; 3) external environmental factors also have some influence on the dispersion in the optical fiber.

Electrical equalizing technology is an effective dispersion compensating technology, in which low-cost, high-performance processing chips are utilized to equalize an optical signal after the optical signal is converted into an electrical signal, so as to reduce the effect from residual dispersion of a fiber system on signal transmission quality. Maximum likelihood sequence estimation (MLSE) equalizing technology is a common electrical equalizing technology at present.

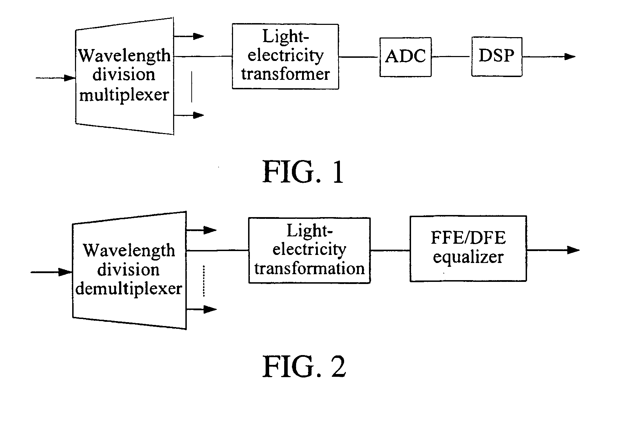

As shown in FIG. 1, in an existing MLSE equalizing system, a signal after being processed by the wavelength division demultiplexer is first converted by an optical/electrical converter into an analog electrical signal, and is then converted by an analog-to-digital converter (ADC) into a digital signal, and finally, a delivered bit sequence is decided by a digital signal processing (DSP) module. It may be sampled twice per bit period by using the ADC, the DSP module employs an MLSE criterion to decide the delivered bit sequence, the criterion is as follows:

$$\mathbf{d} = \arg \max_{s \in S} \sum \log(p(y_{n1}, y_{n2}) | s))$$

In the above equation, $\mathbf{y}_n = (y_{n1}, y_{n2})$ is a vector obtained by sampling in the n-th bit period, $S$ is a set of all possible states, $p(y_{n1}, y_{n2})s$ is a combined probability density function of receiving sampled electrical signals with a sending state of s, and d is a decided state. The MLSE criterion can be implemented through Viterbi algorithm.

Feed forward equalization/decision feedback equalization (FFE/DFE) technology is another electrical equalizing technology in the prior art. As shown in FIG 2, in a traditional FFE/DFE equalizing system, an optical signal after being processed by the wavelength division demultiplexer is first converted into an analog electrical signal through  optical/electrical conversion, and then the decided bit sequence is output through an FFE/DFE equalizer.

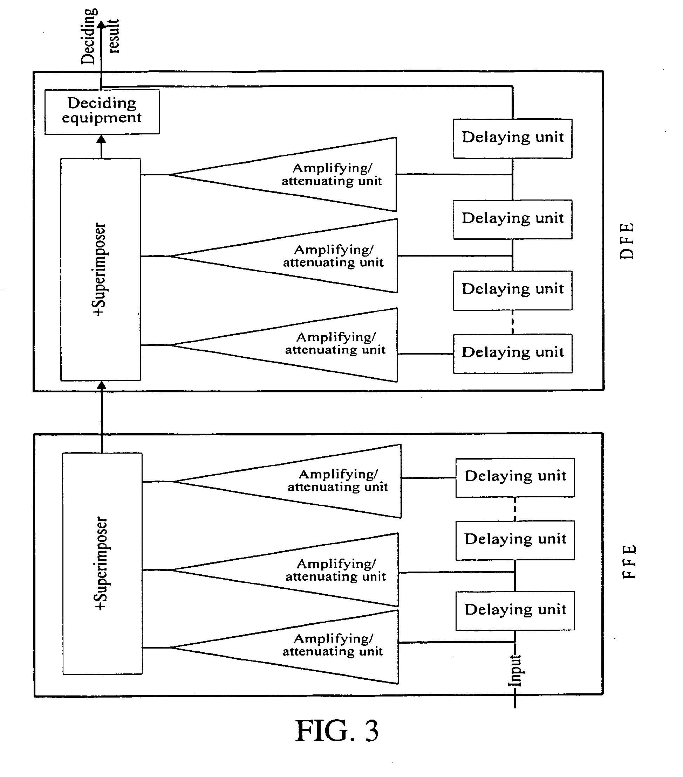

FIG. 3 is a structural view of an FFE/DFE equalizer. The FFE/DFE equalizer is formed by cascading an FFE equalizer and a DFE equalizer. At the FFE equalizer, an original input signal is delayed for m times whose delay time is an integer fraction of a signal period to produce m channels of signals. The non-delayed original signal and the delayed m channels of signals are respectively amplified or attenuated, and then linearly superimposed into a one-channel signal to output an FFE processing result. A coefficient for the amplification or attenuation can be determined by a minimum mean square error algorithm. The coefficient can be a positive, zero, or a negative, and m can be an integer equal to or greater than 1. During FFE processing, the minimum mean square error algorithm is one of relatively commonly used methods for determining the coefficient used for amplifying or attenuating the non-delayed original signal and the delayed m channels of signals, such algorithms as constant modulus algorithm can also be used for determining the coefficient in the prior art. The DFE equalizer receives the FFE processing result, and at the same time, delays the signals output by the DTE equalizer itself for n times whose delaying time is the signal period, so as to produce corresponding n channels of signals. The delayed n channels of signals are respectively amplified or attenuated, and then linearly superimposed with the FFE processing result into a one-channel signal, and the linearly superimposed one-channel signal is decided to output a DFE processing result. The coefficient for the amplification or attenuation separately performed on the delayed n channels of signals can be determined by using the minimum mean square error algorithm. The coefficient can be a positive, zero, or a negative, and the n can be an integer equal to or greater than 1. During DFE processing, the minimum mean square error algorithm is one of relatively commonly used methods for determining the coefficient used for amplifying or attenuating the delayed signal, such algorithms as constant modulus algorithm can also be used for determining the coefficient in the prior art.

During implementing the present invention, the inventors found that the optical

A document US patent application US2007/0286612 discloses that in a receiver, a skew detector detects a skew between two synchronization symbols having different wavelengths among synchronization symbols included in received signals. A skew rough adjustment calculator calculates a delay compensation amount for each received signal based on the skew and a signal delay characteristic in a transmission path. A variable delay processor deskews the received signals based on the delay compensation amount.

## SUMMARY OF THE INVENTION

The embodiments of the present invention provide an electrical equalizing processing method and device for optical signal and an optical fiber communication system, which can reduce the requirement for optical signal to noise ratio for achieving the same error rate under a given residual dispersion condition, and can efficiently improve a dispersion margin of the optical fiber communication system.

To achieve the objectives, in an embodiment, the present invention provides an electrical equalizing processing method for optical signal. The method includes the following steps:

An input optical signal is split into N channels of optical signals, in which N is equal to 2.

Band-pass filtering is performed on the N channels of optical signals, central frequencies of a frequency band used in the performing of the band-pass filtering on the N channels of optical signals are not exactly the same, and a passband of the frequency band and a frequency spectrum range of the N channels of optical signals overlap, wherein central frequency of the input optical signal is $f0$, and central frequencies of frequency bands used in the performing of band-pass filtering on the N channels of optical signals are respectively $f1$ and $f2$, in which $f1<f0<f2$, and $f1$ and $f2$ are symmetrical about $f0$.

The N channels of optical signals on which band-pass filtering is performed are converted into corresponding N channels of analog electrical signals.

An electrical equalizing process is performed on the N channels of analog electrical signals to output an optical signal electrical equalizing processing result.

In an embodiment, the present invention provides an electrical equalizing processing device for optical signal. The device includes an optical splitting unit, N filtering units, N optical/electrical converting units, and an electrical equalizing processing unit.

The optical splitting unit is configured to split an input optical signal into N channels of optical signals, in which N is equal to 2.

The N filtering units corresponding to the N channels of optical signals are configured to perform band-pass filtering on the corresponding optical signals in the N channels of optical signals, central frequencies of a frequency band used in the performing of band-pass filtering on the N channels of optical signals are not exactly the same, and a passband of the frequency band and a frequency spectrum range of the N channels of optical signals overlap, wherein central frequency of the input optical signal is $f0$, and central frequencies of frequency bands used in the performing of band-pass filtering on the N channels of optical signals are respectively $f1$ and $f2$, in which $f1<f0<f2$, and $f1$ and $f2$ are symmetrical about $f0$.

The N optical/electrical converting units corresponding to the N channels of optical signals on which band-pass filtering is performed are configured to convert such optical signals into corresponding N channels of analog electrical signals.

The electrical equalizing processing unit is configured to perform an electrical equalizing process on the N channels of analog electrical signals to output an optical signal electrical equalizing processing result.

Accordingly, in an embodiment, the present invention further provides an optical fiber communication system which includes an electrical equalizing processing device for optical signal, and the electrical equalizing processing device for optical signal is configured to perform the following operations:

An optical signal transmitted from a transmitter is received, and the received optical signal is split into N channel of the optical signal, in which N is equal to 2.

Band-pass filtering is performed on the N channels of optical signals, in which a passband of a frequency band used in the performing of band-pass filtering on the N channels of optical signals and a frequency spectrum range of the N channels of optical signals overlap, wherein central frequency of the input optical signal is $f0$, and central frequencies of frequency bands used in the performing of band-pass filtering on the N channels of optical signals are respectively $f1$ and $f2$, in which $f1<f0<f2$, and $f1$ and $f2$ are symmetrical about $f0$.

The N channels of optical signals on which band-pass filtering is performed are converted into corresponding N channels of analog electrical signals.

An electrical equalizing process is performed on the N channels of analog electrical signals to output an optical signal electrical equalizing processing result.

In the embodiments of the present invention, band-pass filtering is performed on the split multiple channels of optical signals, central frequencies of a frequency band used in the performing of band-pass filtering on the optical signal are not exactly the same, and the amplitude of an optical signal on which band-pass filtering is performed is related to both the amplitude and the phase of the input optical signal. After the optical signal is converted into an electrical signal, the optical equalizing processing device can obtain more information about the optical signal, which can reduce the requirement for optical signal to noise ratio under a certain residual dispersion value and an error rate standard, thereby improving a dispersion margin of the electrical equalizing processing device.

## BRIEF DESCRIPTION OF THE DRAWINGS

FIG. 1 is a structural view of an existing MLSE equalizing system;

FIG. 2 is a structural view of an existing FFE/DFE equalizing system;

FIG. 3 is a structural view of an existing FFE/DFE equalizer;

FIG. 4 is a flow chart of an electrical equalizing processing method for optical signal according to an embodiment of the present invention;

FIG. 5 is a flow chart of an electrical equalizing processing method for optical signal according to another embodiment of the present invention;

FIG. 6 is a flow chart of an electrical equalizing processing method for optical signal according to another embodiment of the present invention;

FIG. 7 is a schematic diagram of an electrical equalizing processing device for optical signal according to an embodiment of the present invention according to another embodiment of the present invention;

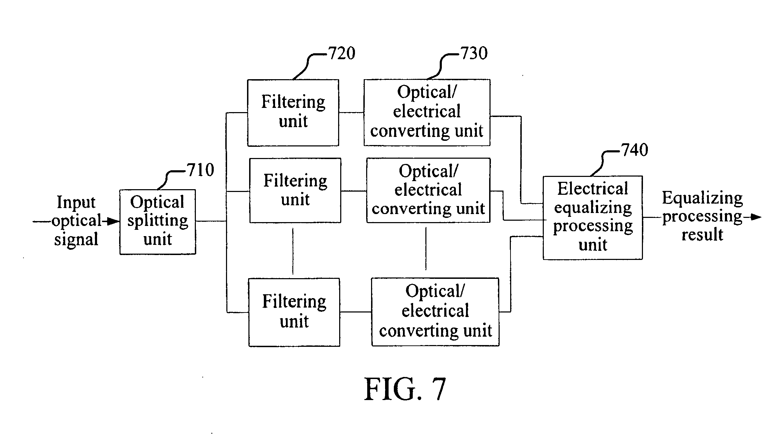

FIG. 7 is a schematic diagram of an electrical equalizing processing device for optical signal according to an embodiment of the present invention;

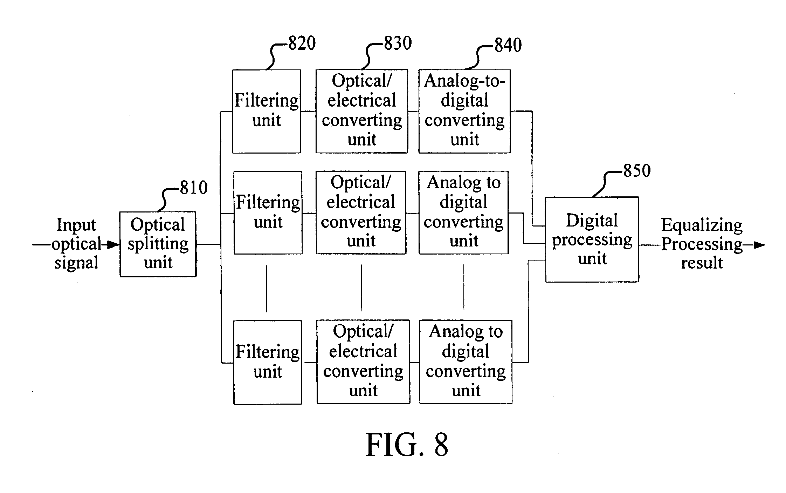

FIG 8 is a schematic diagram of an electrical equalizing processing device for optical signal according to an embodiment of the present invention;

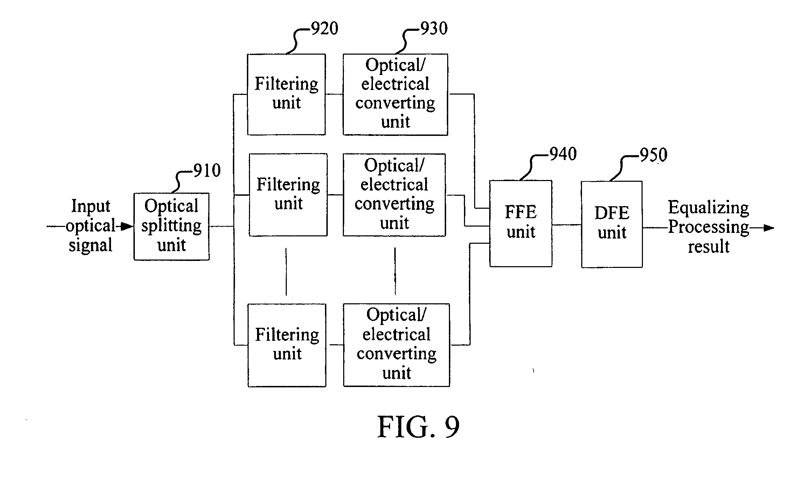

FIG. 9 is a schematic diagram of an electrical equalizing processing device for optical signal according to an embodiment of the present invention;

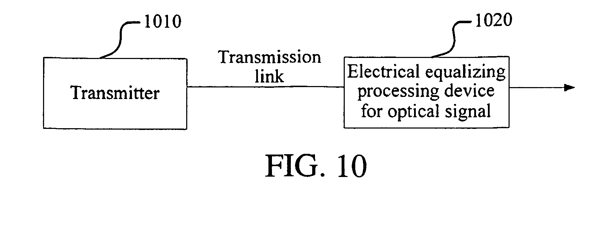

FIG 10 is a schematic diagram of an optical fiber communication system according to an embodiment of the present invention; and

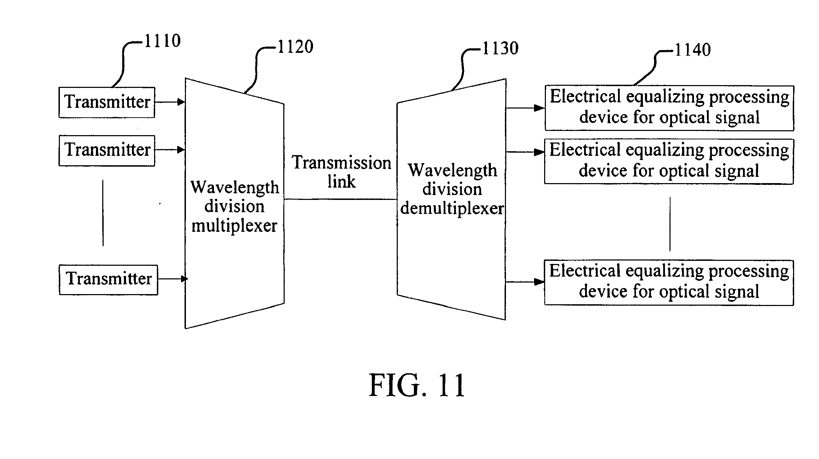

FIG. 11 is a schematic diagram of an optical fiber communication system according to another embodiment of the present invention.

## DETAILED DESCRIPTION OF THE EMBODIMENTS

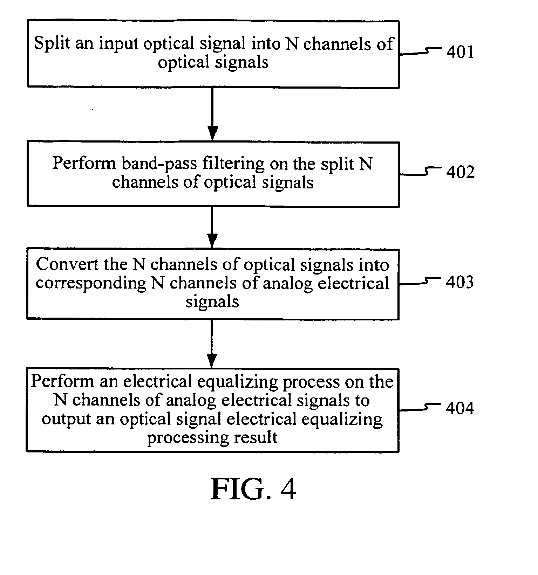

FIG. 4 is a flow chart of an electrical equalizing processing method for optical signal according to an embodiment of the present invention. The method includes the following steps:

Step S401: Split an input optical signal into N channels of optical signals, in which N is an integer greater than or equal to 2.

A frequency and a baud rate of the split optical signal are the same as that of the input optical signal before splitting.

Step S402: Perform band-pass filtering on the N channels of optical signals, in which central frequencies of a frequency band used in the performing of band-pass filtering on the N channels of optical signals are not exactly the same, and a passband of the frequency band and a frequency spectrum range of the N channels of optical signals overlap.

For example, if N is equal to 2, the central frequencies for performing band-pass filtering on the split two channels of optical signals can be set to respectively deviate from the baud rate of the two channels of optical signals by a factor of $\pm 0.2$ compared with the central frequencies of the two channels of optical signals, and the bandwidth is 0.6 times of the baud rate of the two channels of optical signals.

Step S403: Convert the N channels of optical signals on which band-pass filtering is performed into corresponding N channels of analog electrical signals.

Step S404: Perform a joint electrical equalizing process on the N channels of analog electrical signals to output an optical signal electrical equalizing processing result.

In the embodiment of the present invention, band-pass filtering is performed on the split multiple channels of optical signals, central frequencies of a frequency band used in the performing of band-pass filtering on the optical signal are not exactly the same, and the amplitude of an optical signal on which band-pass filtering is performed is related to both the amplitude and the phase of the input optical signal. After the optical signal is converted to an electrical signal, the optical equalizing processing device can obtain more information about the optical signal, which can reduce the requirement for optical signal to noise ratio under a certain residual dispersion value and the same error rate standards, thereby improving a dispersion margin of the electrical equalizing processing device for optical signal. In addition, as a simulation result shows, the electrical equalizing processing method for optical signal according to the embodiment of the present invention can compensate the damage caused by non-linearity of the optical fibers in a transmission link to a certain extent.

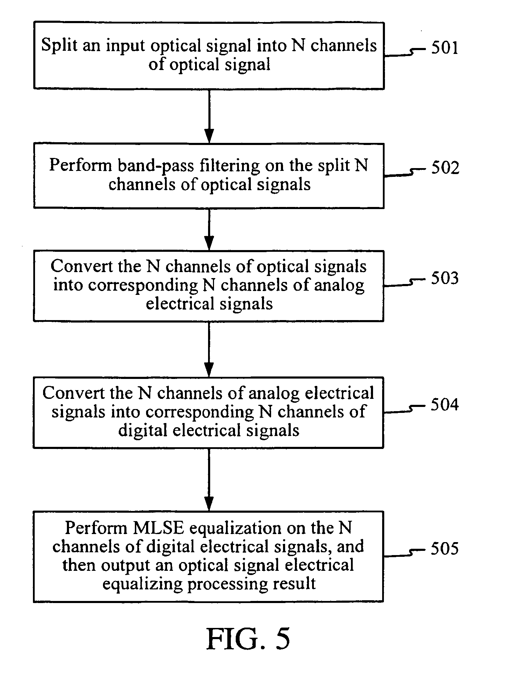

FIG. 5 is a flow chart of an electrical equalizing processing method for optical signal according to another embodiment of the present invention. The method includes the following steps.

Step S501: Split an input optical signal into N channels of optical signals, in which N is an integer greater than or equal to 2.

Step S502: Perform band-pass filtering on the N channels of optical signals, in which central frequencies of a frequency band used in the performing of band-pass filtering on the N channels of optical signals are not exactly the same, and a passband of the frequency band and a frequency spectrum range of the N channels of optical signals overlap.

Step S503: Convert the N channels of optical signals on which band-pass filtering is performed into corresponding N channels of analog electrical signals.

Step S504: Convert the N channels of analog electrical signals into corresponding N channels of digital electrical signals.

The N channels of analog electrical signals may be converted to corresponding N channels of digital electrical signals in the following manner. The N channels of analog electrical signals are sampled once per bit to obtain corresponding N channels of sampled signals, and the N channels of sampled signals are quantified and then converted to the corresponding N channels of digital electrical signals. Alternatively, the N channels of analog electrical signals are sampled twice or more per bit to obtain corresponding N channels of sampled signals, and the N channels of sampled signals are quantified and then converted to the corresponding N channels of digital electrical signals.

Step S505: Perform an MLSE equalization on the N channels of digital electrical signals, and then output an optical signal electrical equalizing processing result.

The criterion for the MLSE equalizing is formulated as follows:

$$\mathbf{d} = \arg \max_{\mathbf{s} \in S} \sum \log( p(\mathbf{y}_n^{(1)}, \mathbf{y}_n^{(2)}, \cdots\cdots, \mathbf{y}_n^{(N)}) | \mathbf{s}))$$

The following approximation can be made to simplify the computations:

$$\log( p(\mathbf{y}_n^{(1)}, \mathbf{y}_n^{(2)}, \cdots\cdots, y_n^{(N)}) | \mathbf{s})) \approx \sum_k \log( p(\mathbf{y}_n^{(k)} | \mathbf{s}))$$

in which $\mathbf{y}_n^{(k)} = (y_{n1}^{(k)}, y_{n2}^{(k)}, \cdots, y_{nL}^{(k)})$ is a vector constituted by samples within the n-th bit period of the k-th channel of the digital signal, with a number of sampling times per period being L.

$S$ is a set of all possible states, $p(\mathbf{y}_n^{(k)} \mid \mathbf{S})$ is a combined probability density function of receiving sampled electrical signals with a sending state of S, and **d** is a decided state. The MLSE equalizing can be implemented through Viterbi algorithm.

Because the existing algorithm is not a focus of the embodiment of the present invention, the Viterbi algorithm is not described in detail.

In the embodiment of the present invention as shown in FIG. 5, the central frequency of the input optical signal is f0. Firstly, the input optical signal is split into two identical channels of optical signals; secondly, band-pass filtering is performed on the two channels of optical signals, with the central frequencies of a frequency band used in the performing of band-pass filtering on the two channels of optical signals being respectively f1 and f2, in which f1<f0<f2, and f1 and f2 are symmetrical about f0. Without losing generality, it is also possible to set f2<f0<f1, in which f1 and f2 are symmetrical about f0. The two channels of optical signals obtained by performing band-pass filtering are converted to corresponding two channels of analog electrical signals, and the two channels of analog electrical signals are respectively sampled once per bit and quantified, and then converted to corresponding two channels of digital electrical signals. Finally, an MLSE equalization is performed on the two channels of digital electrical signals, and then an optical signal electrical equalizing processing result is output.

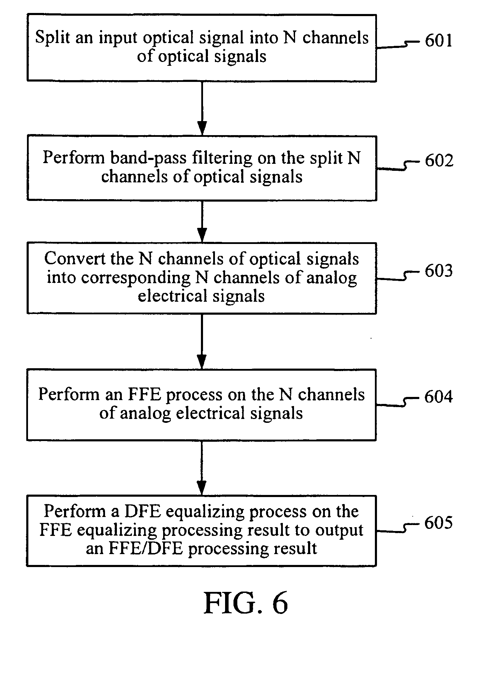

FIG. 6 is a flow chart of an electrical equalizing processing method for optical signal according to another embodiment of the present invention. The method includes the following steps.

Step S601: Split an input optical signal into N channels of optical signals, in which N is an integer greater or equal to 2.

Step S602: Perform band-pass filtering on the N channels of optical signals, in which central frequencies of a frequency band used in the band-pass filtering for the N channels of optical signals are not exactly the same, and a passband of the frequency band and a frequency spectrum range of the N channels of optical signals overlap.

Step S603: Convert the N channels of optical signals on which band-pass filtering is performed into corresponding N channels of analog electrical signals.

Step S604: Perform an FFE process on the N channels of analog electrical signals to output an FFE processing result.

In the following, an example is taken to illustrate the specific procedure of the FFE process. The N channels of analog signals are respectively delayed for m times to produce corresponding Nm (N times m) channels of signals, with a delaying time used in the m delaying processes of the respective N channels of analog signals being an integer fraction of a signal period. The non-delayed N channels of analog signals and the delayed Nm channels of signals are respectively amplified or attenuated, and the amplified or attenuated N(m+1) channels of signals are linearly superimposed into a one-channel signal for being output.

The coefficient for the amplification or attenuation is determined by a minimum mean square error algorithm. The coefficient can be a positive, zero, or a negative, and the m is an integer equal to or greater than 1. During FFE processing, the minimum mean square error algorithm is one of relatively commonly used methods for determining the coefficient for amplifying or attenuating the non-delayed N channels of analog signals and the delayed Nm channels of signals, such algorithms as constant modulus algorithm can also be used for determining the coefficient in the prior art. Delaying processing time for the respective N channels of analog signals in FFE processing may not be the same. For convenience, only a case in which all the N channels of analog signals are delayed for m times is given here.

Step S605: Perform a DFE process on the FFE processing result to output an FFE/DFE processing result.

The FFE processing result is received, and at the same time, the processing results output and returned after DFE processing are delayed for n times whose delaying time is the signal period, so as to produce corresponding n channels of signals. The delayed n channels of signals are respectively amplified or attenuated, and then linearly superimposed with the FFE processing result into a one-channel signal, and the linearly superimposed one-channel signal is decided to output a DFE processing result. The coefficient for the amplification or attenuation of the delayed n channels of signals respectively can be determined by the minimum mean square error algorithm. The coefficient can be a positive, zero, or a negative, and the n can be an integer equal to or greater than 1. During DFE processing, the minimum mean square error algorithm is one of relatively commonly used methods for determining the coefficient used for amplifying or attenuating the delayed signal, such algorithms as constant modulus algorithm can also be used for determining the coefficient in the prior art.

Both FFE process and DFE process are commonly used equalizing processing methods, and are not repeated in detail herein.

FIG. 7 is a schematic diagram of an electrical equalizing processing device for optical signal according to an embodiment of the present invention. The electrical equalizing processing device for optical signal includes an optical splitting unit 710, filtering units 720, optical/electrical converting units 730, and an electrical equalizing processing unit 740.

The optical splitting unit 710 is configured to split an input optical signal into N channels of optical signals, in which N is an integer greater than or equal to 2.

The N filtering units 720 corresponding to the N channels of optical signals are configured to perform band-pass filtering on the optical signals corresponding to the N channels of optical signals, in which central frequencies of a frequency band used in the performing of band-pass filtering on the N channels of optical signals are not exactly the same, and a passband of the frequency band and a frequency spectrum range of the N channels of optical signals overlap.

The N optical/electrical converting units 730 corresponding to the N channels of optical signals on which band-pass filtering is performed are configured to convert such optical signals into corresponding N channels of analog electrical signals.

The electrical equalizing processing unit 740 is configured to perform an electrical equalizing process on the N channels of analog electrical signals to output an optical signal electrical equalizing processing result.

In the embodiment of the present invention, band-pass filtering is performed on the split multiple channels of optical signals, central frequencies of a frequency band used in the performing of band-pass filtering on the optical signal are not exactly the same, and the amplitude of an optical signal on which band-pass filtering is performed is related to both the amplitude and the phase of the input optical signal. After the optical signal is converted to an electrical signal, the optical equalizing processing device can obtain more information about the optical signal, which can reduce the requirement for optical signal to noise ratio under a certain residual dispersion value and the same error rate standards, thereby improving a dispersion margin of the electrical equalizing processing device. In addition, as a simulation result shows, the electrical equalizing processing device according to the embodiment of the present invention can compensate the damage caused by non-linearity of the optical fibers in a transmission link to a certain extent.

FIG. 8 is a schematic diagram of an electrical equalizing processing device for optical signal according to an embodiment of the present invention. The electrical equalizing processing device for optical signal includes an optical splitting unit 810, filtering units 820, optical/electrical converting units 830, analog-to-digital converting units 840, and a digital processing unit 850.

The optical splitting unit 810 is configured to split an input optical signal into N channels of optical signals, in which N is an integer greater than or equal to 2.

The N filtering units 820 corresponding to the N channels of optical signals are configured to perform band-pass filtering on the optical signals corresponding to the N channels of optical signals, in which central frequencies of a frequency band used in the performing of band-pass filtering on the N channels of optical signals are not exactly the same, and a passband of the frequency band and a frequency spectrum range of the N channels of optical signals overlap.

The N optical/electrical converting units 830 corresponding to the N channels of optical signals on which band-pass filtering is performed are configured to convert such optical signals into corresponding N channels of analog electrical signals.

The N analog-to-digital converting units 840 corresponding to the N channels of analog electrical signals are configured to convert the N channels of analog electrical signals to corresponding N channels of digital electrical signals.

The digital processing unit 850 is configured to perform an MLSE equalization on the N channels of digital electrical signals to output a best optical signal electrical equalizing processing result.

The analog-to-digital converting units 840 may include a sampling subunit and a quantifying subunit.

The sampling subunit is configured to sample the analog electrical signals to obtain corresponding sampled signals.

The quantifying subunit is configured to quantify the sampled signals and convert the quantified sampled signals to corresponding digital electrical signals.

The sampling subunit performs sampling on the analog electrical signals once per bit to obtain the corresponding sampled signals, and the quantifying subunit quantifies the sampled signals and converts them to the corresponding digital electrical signals.

The sampling subunit provided in the embodiment of the present invention can obtain corresponding N channels of sampled signals through sampling the N channels of analog electrical signals once per bit. For a special case in which N=2, the embodiment of the present invention can obtain two channels of optical signals of an upper vestigial sideband and a lower vestigial sideband. Compared with sampling twice per bit by the analog-to-digital converting unit in the prior art and with a premise that the central frequency and bandwidth of the filter are suitable, the analog-to-digital converting unit of the equalizing processing device according to the embodiment of the present invention only performs sampling on the analog electrical signals once per bit, and combines the two channels of sampling to obtain information in an amount that is no less than that obtained by sampling twice per bit in the prior art. Therefore, the analog-to-digital converting unit is easily implemented if the baud rate of the signal is very high. Meanwhile, with a premise that the same dispersion margin is achieved, the number of states of electrical equalization can be reduced, thereby reducing the storage capacity and computing load of the digital signal processing unit.

The central frequency used by each filtering unit in performing of band-pass filtering on one corresponding channel of the optical signal in the N channels of optical signals is the central frequency of the filtering unit. The central frequency of the filtering unit can be greater than the central frequency of the corresponding channel of the optical signal, and can also be less than or equal to the central frequency of the corresponding channel of the optical signal. For example, it can be set that the central frequencies of a portion of the filtering units in the N filtering units are greater than the central frequency of the optical signal corresponding to the filtering units, the central frequencies of a portion of the filtering units are less than the central frequency of the optical signal corresponding to the filtering units, and the central frequencies of a portion of the filtering units are equal to the central frequency of the optical signal corresponding to the filtering units.

For example, if N is equal to 2, the frequency and the signal baud rate of the two channels of optical signals split by the optical splitting unit are the same as those of the optical signal input into the optical splitting unit, the central frequencies for filtering the split two channels of optical signals can be set to respectively deviate from the baud rate of the signal by a factor of $\pm 0.2$ compared with the central frequencies of the optical signal, and the bandwidth can be set to be 0.6 times of the baud rate of the signal.

In the embodiment of the present invention as shown in FIG. 8, the central frequency of the input optical signal is f0. Firstly, the input optical signal is split by the optical splitting unit 810 into two identical channels of optical signals; secondly, each channel of the optical signal is filtered by the filtering unit 820 with the central frequencies being f1 and f2, in which f1<f0<f2, and f1 and f2 are symmetrical about f0. Without losing generality, it is also possible to set f2<f0<fl, in which f1 and f2 are symmetrical about f0. The two channels of optical signals obtained by filtering respectively pass through the optical/electrical converting unit 830, and then pass through the analog-to-digital converting unit 840 for being converted to two channels of digital electrical signals after being sampled and quantified once per bit. Finally, the digital electrical signals are sent to the digital processing module 850 for being MLSE decided, so as to output an optical signal electrical equalizing processing result.

FIG. 9 is a schematic diagram of an electrical equalizing processing device for optical signal according to an embodiment of the present invention. The electrical equalizing processing device for optical signal includes an optical splitting unit 910, filtering units 920, optical/electrical converting units 930, an FFE unit 940, and a DFE unit 950.

The optical splitting unit 910 is configured to split an input optical signal into N channels of optical signals, in which N is an integer greater than or equal to 2.

The N filtering units 920 corresponding to the N channels of optical signals are configured to perform band-pass filtering on the optical signals corresponding to the N channels of optical signals, in which central frequencies of a frequency band used in the performing of band-pass filtering on the N channels of optical signals are not exactly the same, and a passband of the frequency band and a frequency spectrum range of the N channels of optical signals overlap.

The N optical/electrical converting units 930 corresponding to the N channels of optical signals on which band-pass filtering is performed are configured to convert such optical signals into corresponding N channels of analog electrical signals.

The FFE processing unit 940 is configured to perform an FFE process on the N channels of analog electrical signals and output an FFE processing result.

The FFE processing unit 940 respectively delays the N channels of analog signals for m times to produce corresponding Nm (N times m) channels of signals with a delaying time used in the m delaying processes of the respective N channels of analog signals being an integer fraction of a signal period, and respectively amplifies or attenuates the non-delayed N channels of analog signals and the delayed Nm channels of signals, and linearly superimposes the amplified or attenuated N(m+1) channels of signals into a one-channel signal to output the FFE processing result.

The coefficient for the amplification or attenuation is determined by a minimum mean square error algorithm. The coefficient can be a positive, zero, or a negative, and the m is an integer equal to or greater than 1. During FFE processing, the minimum mean square error algorithm is one of relatively commonly used methods for determining the coefficient for amplifying or attenuating the non-delayed N channels of analog signals and the delayed Nm channels of signals, such algorithms as constant modulus algorithm can also be used for determining the coefficient in the prior art. Delaying processing time for the respective N channels of analog signals in FFE processing may not be the same. For convenience, only a case in which all the N channels of analog signals are delayed for m times is given here.

The DFE processing unit 950 is configured to receive the FFE processing result output by the FFE processing unit 940 and perform a DFE process on the FFE processing result to output an FFE/DFE processing result.

A DFE equalizer receives the FFE processing result, and at the same time, delays the processing results output and returned by the DFE equalizer itself for n times whose delaying time is the signal period, so as to produce corresponding n channels of signals, and respectively amplifies or attenuates the delayed n channels of signals and then linearly superimposes them with the FFE processing result into a one-channel signal, and the linearly superimposed one-channel signal is decided to output the DFE processing result. The coefficient for the amplification or attenuation of the delayed n channels of signals respectively can be determined by the minimum mean square error algorithm, the n can be an integer equal to or greater than 1. During DFE processing, the minimum mean square error algorithm is one of relatively commonly used methods for determining the coefficient used for amplifying or attenuating the delayed signal, such algorithms as constant modulus algorithm can also be used for determining the coefficient in the prior art.

Both FFE process and DFE process are commonly used equalizing processing methods, and are not a focus of the present invention; therefore, they are not repeated in detail herein.

FIG. 10 is a schematic diagram of an optical fiber communication system according to an embodiment of the present invention. The optical fiber communication system includes an electrical equalizing processing device for optical signal 1020 connected to a transmitter 1010 by using a transmission link. The electrical equalizing processing device for optical signal 1020 is configured to perform the following operations.

An optical signal that is received from the transmitter 1010 is split into N channels of optical signals, in which N is an integer greater than or equal to 2.

Band-pass filtering is performed on the N channels of optical signals, in which central frequencies of a frequency band used in the performing of band-pass filtering on the N channels of optical signals are not exactly the same, and a passband of the frequency band and a frequency spectrum range of the N channels of optical signals overlap.

The N channels of optical signals on which band-pass filtering is performed are converted into corresponding N channels of analog electrical signals.

An electrical equalizing process is performed on the N channels of analog electrical signals to output an optical signal electrical equalizing processing result.

The transmitter 1010 is configured to output the optical signal.

FIG. 11 is a schematic diagram of an optical fiber communication system according to another embodiment of the present invention. The difference between the optical fiber communication system in this embodiment and the optical fiber communication system shown in FIG. 10 is that the optical fiber communication system includes M transmitters 1110 and M electrical equalizing processing device for optical signals 1140 provided in the embodiments of the present invention, in which M is an integer equal to or greater than 2, and further includes a wavelength division multiplexer 1120 and a wavelength division demultiplexer 1130.

The transmitter 1110 is configured to output an optical signal.

The wavelength division multiplexer 1120 is configured to multiplex M channels of optical signals output by the M transmitters into a one-channel optical signal and then output.

The wavelength division demultiplexer 1130 is configured to receive the one-channel optical signal input from the wavelength division multiplexer 1120, split the one-channel optical signal into M channels of optical signals and then output to the corresponding M electrical equalizing processing device for optical signals.

The wavelength division multiplexer 1120 and the wavelength division demultiplexer 1130 are connected by using a transmission link.

The electrical equalizing processing devices for optical signal 1140 are configured to receive the optical signal output by the wavelength division demultiplexer 1130 and split the received optical signal into N channels of optical signals, in which N is an integer greater than or equal to 2;

perform band-pass filtering on the N channels of optical signals, in which central frequencies of a frequency band used in the band-pass filtering for the N channels of optical signals are not exactly the same, and a passband of the frequency band and a frequency spectrum range of the N channels of optical signals overlap;

convert the N channels of optical signals on which band-pass filtering is performed into corresponding N channels of analog electrical signals; and

perform an electrical equalizing process on the N channels of analog electrical signals to output an optical signal electrical equalizing processing result.

In the embodiments of the present invention, band-pass filtering is performed on the split multiple channels of optical signals, central frequencies of a frequency band used in the performing of band-pass filtering on the optical signal are not exactly the same, and the amplitude of an optical signal on which band-pass filtering is performed is related to both the amplitude and the phase of the input optical signal. After the optical signal is converted to an electrical signal, the optical equalizing processing device can obtain more information about the optical signal, which can reduce the requirement for optical signal to noise ratio under a certain residual dispersion value and the same error rate standards, thereby improving a dispersion margin of the electrical equalizing processing device. In addition, as a simulation result shows, the electrical equalizing processing device according to the embodiments of the present invention can compensate the damage caused by non-linearity of the optical fibers in a transmission link to a certain extent.

What are described in detail above are an electrical equalizing processing method for optical signal, device and an optical fiber communication system provided in the embodiments of the present invention. It is apparent that person having ordinary skill in the art can make variations and modifications to the present invention in terms of the specific implementations and application scopes according to the ideas of the present invention. Therefore, the specification shall not be construed as limitations to the present invention.

**Claims**

1. An electrical equalizing processing method for optical signal, comprising:

   splitting an input optical signal into N channels of optical signals, wherein N is equal to 2 (401);
   performing band-pass filtering on the N channels of optical signals, wherein central frequencies of a frequency band used in the performing of band-pass filtering on the N channels of optical signals are not exactly the same, and a passband of the frequency band and a frequency spectrum range of the N channels of optical signals overlap (402), wherein a central frequency of the input optical signal is f0, and central frequencies of frequency bands used in the performing of the band-pass filtering on the N channels of optical signals are respectively f1 and f2, in which f1<f0<f2, and f1 and f2 are symmetrical about f0;
   converting the N channels of optical signals on which band-pass filtering is performed into corresponding N channels of analog electrical signals (403); and
   performing an electrical equalizing process on the N channels of analog electrical signals to output an optical signal electrical equalizing processing result (404).

2. The method according to claim 1, wherein the performing the electrical equalizing process on the N channels of analog electrical signals to output the optical signal electrical equalizing processing result comprises:

   converting the N channels of analog electrical signals to corresponding N channels of digital electrical signals; and
   performing a maximum likelihood sequence estimation ,MLSE, equalization on the N channels of digital electrical signals, and then outputting the optical signal electrical equalizing processing result.

3. The method according to claim 2, wherein the converting the N channels of analog electrical signals to the corresponding N channels of digital electrical signals comprises:

   sampling the N channels of analog electrical signals to obtain corresponding N channels of sampled signals; and
   converting the N channels of sampled signals to the corresponding N channels of digital electrical signals after quantifying the N channels of sampled signals.

4. The method according to claim 1, wherein the performing the electrical equalizing process on the N channels of analog electrical signals to output the optical signal electrical equalizing processing result comprises:

   performing a feed forward equalization 'FFE' process on the N channels of analog electrical signals to output an FFE processing result; and
   performing a decision feedback equalization 'DFE' process on the FFE processing result to output an FFE/DFE processing result.

5. The method according to any one of claims 1 to 4, wherein N is 2, and differences between the central frequencies used in the performing of band-pass filtering on the split two channels of optical signals and the central frequency of the input optical signal are the same in absolute value, and are symmetrical about the central frequency of the input optical signal.

6. An electrical equalizing processing device for optical signal, comprising:

   an optical splitting unit (710), configured to split an input optical signal into N channels of optical signals, wherein N is equal to 2;
   N filtering units (720) corresponding to the N channels of optical signal, configured to perform band-pass filtering on the optical signals corresponding to the N channels of optical signals, wherein central frequencies of a frequency band used in the performing of band-pass filtering on the N channels of optical signals are not the same, and a passband of the frequency band and a frequency spectrum range of the N channels of optical signals overlap, wherein a central frequency of the input optical signal is f0, and central frequencies of frequency bands used in the performing of the band-pass filtering on the N channels of optical signals are respectively f1 and f2, in which f1<f0<f2, and f1 and f2 are symmetrical about f0;

N optical/electrical converting units (730) corresponding to the filtered N channels of optical signal on which band-pass filtering is performed, configured to convert such optical signals into corresponding N channels of analog electrical signals; and

an electrical equalizing processing unit (740), configured to perform an electrical equalizing process on the N channels of analog electrical signals to output an optical signal electrical equalizing processing result.

7. The device according to claim 6, wherein the electrical equalizing processing unit comprises:

N analog-to-digital converting units corresponding to the N channels of the analog electrical signal, configured to convert the N channels of analog electrical signals to corresponding N channels of digital electrical signals; and

a digital processing unit, configured to perform a maximum likelihood sequence estimation ,MLSE, equalization on the N channels of digital electrical signals, and output the optical signal electrical equalizing processing result.

8. The device according to claim 7, wherein the analog-to-digital converting units comprise:

a sampling subunit, configured to sample the corresponding analog electrical signal to obtain corresponding sampled signals; and

a quantifying subunit, configured to quantify the sampled signals and convert the quantified sampled signals to corresponding digital electrical signals.

9. The device according to claim 6, wherein the electrical equalizing processing unit comprises:

a feed forward equalization ,FFE, processing unit, configured to perform an FFE process on the N channels of analog electrical signals and output an FFE processing result; and

a decision feedback equalization ,DFE, processing unit, configured to perform a DFE process on the FFE processing result and output an FFE/DFE processing result.

10. An optical fiber communication system, comprising an electrical equalizing processing device for optical signal connected to a transmitter by using a transmission link, wherein the electrical equalizing processing device for optical signal is configured to:

receive an optical signal transmitted from the transmitter, and split the received optical signal into N channel of optical signals, wherein N is equal to 2;

perform band-pass filtering on the N channels of optical signals, wherein a passband of a frequency band used in the performing of band-pass filtering on the N channels of optical signals and a frequency spectrum range of the N channels of optical signals overlap, wherein a central frequency of the input optical signal is f0, and central frequencies of frequency bands used in the performing of the band-pass filtering on the N channels of optical signals are respectively f1 and f2, in which f1<f0<f2, and f1 and f2 are symmetrical about f0;

convert the channels of optical signals on which band-pass filtering is performed into corresponding N channels of analog electrical signals; and

perform an electrical equalizing process on the N channels of analog electrical signals to output an electrical equalizing processing result of the optical signal.

11. The optical fiber communication system according to claim 10, wherein the optical fiber communication system comprises one electrical equalizing processing device for optical signal, the optical fiber communication system further comprises:

one transmitter, configured to output an optical signal to the electrical equalizing processing device for optical signal.

12. The optical fiber communication system according to claim 10, wherein the optical fiber communication system comprises M electrical equalizing processing devices for optical signal, M is an integer equal to or greater than 2; accordingly, the optical fiber communication system further comprises:

M transmitters, configured to output the optical signals;

a wavelength division multiplexer, configured to receive M channels of optical signals output by the M transmitters and multiplex the M channels of optical signals into a one-channel optical signal and then output; and

a wavelength division demultiplexer, configured to receive the one-channel optical signal input from the wavelength division multiplexer, split the one-channel optical signal into M channels of optical signals and then output to the corresponding M electrical equalizing processing devices for optical signal.

**Patentansprüche**

1. Elektrisches Entzerrungsverarbeitungsverfahren für ein optisches Signal, das die folgenden Schritte aufweist:

Aufteilen eines optischen Eingangssignals in N Kanäle optischer Signale, wobei N gleich 2 ist (401);
Durchführen einer Bandpassfilterung an den N Kanälen optischer Signale, wobei die Mittenfrequenzen eines Frequenzbands, das beim Durchführen der Bandpassfilterung an den N Kanälen optischer Signale verwendet wird, nicht exakt dieselben sind, und sich ein Durchlassbereich des Frequenzbands und ein Frequenzspektratbereich der N Kanäle optischer Signale überlappen (402), wobei eine Mittenfrequenz des optischen Eingangssignals $f0$ ist, und die Mittenfrequenzen von Frequenzbändern, die beim Durchführen der Bandpassfilterung an den N Kanälen optischer Signale verwendet werden, jeweils $f1$ und $f2$ sind, wobei $f1<f0<f2$, und $f1$ und $f2$ symmetrisch um $f0$ sind;
Umwandeln der N Kanäle optischer Signale, an denen eine Bandpassfilterung durchgeführt wird, in entsprechende N Kanäle analoger elektrischer Signale (403); und
Durchführen eines elektrischen Entzerrungsprozesses an den N Kanälen analoger elektrischer Signale, um ein Resultat einer elektrischen Entzerrungsverarbeitung an einem optischen Signal (404) auszugeben.

2. Verfahren nach Anspruch 1, wobei das Durchrühren des elektrischen Entzerrungsprozesses an den N Kanälen analoger elektrischer Signale, um das Resultat einer elektrischen Entzerrungsverarbeitung an einem optischen Signal auszugeben, aufweist:

Umwandeln der N Kanäle analoger elektrischer Signale in entsprechende N Kanäle digitaler elektrischer Signale; und
Durchführen einer Entzerrung mit Hilfe einer Abschätzung der Sequenz mit maximaler Wahrscheinlichkeit, MLSE, an den N Kanälen digitaler elektrischer Signale, und
dann Ausgeben des Resultats einer elektrischen Entzerrungsverarbeitung an einem optischen Signale.

3. Verfaliren nach Anspruch 2, wobei das Umwandeln der N Kanäle analoger elektrischer Signale in die entsprechenden N Kanäle digitaler elektrischer Signale aufweist:

Abtasten der N Kanäle analoger elektrischer Signale, um entsprechende N Kanäle abgetasteter Signale zu erhalten; und
Umwandeln der N Kanäle abgetasteter Signale in die entsprechenden N Kanäle digitaler elektrischer Signale nach einem Quantifizieren der N Kanäle abgetasteter Signale.

4. Verfahren nach Anspruch 1, wobei das Durchführen des elektrischen Entzerrungsprozesses an den N Kanälen analoger elektrischer Signale, um das Resultat einer elektrischen Entzerrungsverarbeitung an einem optischen Signal auszugeben, aufweist:

Durchführen eines vorwärtsgekoppelten Entzerrungs-, FFE, Prozesses an den N Kanälen analoger elektrischer Signale, um ein FFE-Verarbeitungsresultat auszugeben; und
Durchführen eines entscheidungsrückgeführten Entzerrungs-, DFE, Prozesses am FFE-Verarbeitungsresultat, um ein FFE/DFE-Verarbeitungsresultat auszugeben.

5. Verfahren nach einem der Ansprüche 1 bis 4, wobei N 2 ist, und die Differenzen zwischen den Mittenfrequenzen, die beim Durchführen der Bandpassfilterung an den beiden aufgeteilten Kanälen optischer Signale verwendet werden, und die Mittenfrequenz des optischen Eingangssignals denselben Absolutwert aufweist und um die Mittenfrequenz des optischen Eingangssignals symmetrisch sind.

6. Elektrische Entzerrungsverarbeitungsvorrichtung für ein optisches Signal, die Folgendes aufweist:

eine optische Aufteilungseinheit (710), die konfiguriert ist, ein optisches Eingangssignal in N Kanäle optischer Signale aufzuteilen, wobei N gleich 2 ist;
N Filtereinheiten (720), die den N Kanälen optischer Signale entsprechen, die konfiguriert sind, eine Bandpassfilterung an den optischen Signalen durchzuführen, die den N Kanälen optischer Signale entsprechen, wobei die Mittenfrequenzen eines Frequenzbands, das beim Durchführen der Bandpassfilterung an den N Kanälen optischer Signale verwendet wird, nicht dieselben sind, und sich ein Durchlassbereich des Frequenzbands und ein Frequenzspektralbereich der N Kanäle optischer Signale überlappen, wobei eine Mittenfrequenz des optischen Eingangssignals f0 ist, und

Mittenfrequenzen von Frequenzbändern, die beim Durchführen der Bandpassfilterung an den N Kanälen optischer Signale verwendet werden, jeweils f1 und f2 sind, wobei f1<f0<f2, und f1 und f2 symmetrisch um f0 sind: N optische/elektrische Umwandlungseinheiten (730), die den gefilterten N Kanälen optischer Signale entsprechen, an denen eine Bandpassfilterung durchgeführt wird, die konfiguriert ist, solche optischen Signale in entsprechende N Kanäle analoger elektrischer Signale umzuwandeln; und

eine elektrische Entzerrungsverarbeitungseinheit (740), die konfiguriert ist, einen elektrischen Entzerrungsprozess an den N Kanälen analoger elektrischer Signale durchzuführen, um ein Resultat einer elektrischen Entzerrungsverarbeitung an einem optischen Signal auszugeben.

7. Vorrichtung nach Anspruch 6, wobei die elektrische Entzerrungsverarbeitungseinheit aufweist:

N Analog-Digital-Wandlereinheiten, die den N Kanälen analoger elektrischer Signale entsprechen, die konfiguriert sind, die N Kanäle analoger elektrischer Signale in entsprechende N Kanäle digitaler elektrischer Signale umzuwandeln; und

eine digitale Verarbeitungseinheit, die konfiguriert ist, eine Entzerrung mittels einer Abschätzung der Sequenz mit maximaler Wahrscheinlichkeit, MLSE, an den N Kanälen digitaler elektrischer Signale auszuführen und das Resultat einer elektrischen Entzerrungsverarbeitung an einem optischen Signal auszugeben.

8. Vorrichtung nach Anspruch 7, wobei die Analog-Digital-Wandlereinheiten aufweisen:

eine Abtastuntereinheit, die konfiguriert ist, die entsprechenden analogen elektrischen Signale abzutasten, um die entsprechenden abgetasteten Signale zu erhalten; und

eine Quantifizierungsuritereinheit, die konfiguriert ist, die abgetasteten Signale zu quantifizieren und die quantifizierten abgetasteten Signale in entsprechende digitale elektrische Signale umzuwandeln.

9. Vorrichtung nach Anspruch 6, wobei die elektrische Entzerrungsverarbeitungseinheit aufweist:

eine vorwärtsgekoppelte Entzerrungs-, FFE, Verarbeitungseinhait, die konfiguriert ist, einen FFE-Prozess an den N Kanälen analoger elektrischer Signale auszuführen und ein FFE-Verarbeitungsresultat auszugeben; und

eine entscheidungsrückgeführte Entzerrungs-, DFE, Verarheitungseinheit, die konfiguriert ist, einen DFE-Prozess am FFE-V erarbeitungsresultat auszufahren und ein FFE/DFE-Verarbeitungsresultat auszugeben.

10. Glasfaserkommunikationssystern, das eine elektrische Entzerrungsverarbeitungsvorrichtung für ein optisches Signal aufweist, die mit einem Sender mittels einer Übertragungsverbindung verbunden ist, wobei die elektrische Entzerrungsverarbeitungsvorrichtung für ein optisches Signal konfiguriert ist:

ein vom Sender übertragenes optisches Signal zu empfangen und das empfangene optische Signal in N Kanäle optischer Signale auszuteilen, wobei N gleich 2 ist;

eine Bandpassfilterung an den N Kanälen optischer Signale durchzuführen, wobei sich ein Durchlassbereich eines Frequenzbands, das beim Durchführen der Bandpassfilterung an den N Kanälen optischer Signale verwendet wird, und ein Frequenzspektralbereich der N Kanäle optischer Signale überlappen, wobei eine Mittenfrequenz des optischen Eingangssignals f0 ist, und Mittenfrequenzen von Frequenzbändern, die beim Durchführen der Bandpassfilterung an den N Kanälen optischer Signale verwendet werden, jeweils f1 und f2 sind, wobei f1<f0<f2, und f1 und f2 symmetrisch um f0 sind;

die Kanäle optischer Signale, an denen eine Bandpassfilterung durchgerührt wird, in entsprechende N Kanäle analoger elektrischer Signale umzuwandeln; und

einen elektrischen Entzerrungsprozess an den N Kanälen analoger elektrischer Signale durchzuführen, um ein Resultat einer elektrischen Entzerrungsverarbeitung des optischen Signals auszugeben.

11. Glasfaserkommunikationssystem nach Anspruch 10, wobei das Glasfaserkommunikationssystem eine elektrische Entzerrungsverarbeitungsvorrichtung für das optische Signal aufweist und das Glasfaserkominunikationssystem ferner aufweist:

einen Sender, der konfiguriert ist, ein optisches Signal an die elektrische Entzerrungsverarbeittmgsvorrichtung für ein optisches Signal auszugeben.

12. Glasfaserkommunikationssystem nach Anspruch 10, wobei das Glasfaserkommunikationssystem M elektrische Entzerrungsverarbeitungsvorrichtungen für ein optisches Signal aufweist, wobei M eine Ganzzahl ist, die gleich oder größer als 2 ist; wobei das Glasfaserkommunikationssystem ferner aufweist:

M Sender, die konfiguriert sind, optische Signale auszugeben;
einen Wellenlängenmultiplexer, der konfiguriert ist, M Kanäle optischer Signale zu empfangen, die durch die M Sender ausgegeben werden, und die M Kanäle optischer Signale zu einem einkanaligen optischen Signal zu multiplexen und dann auszugeben; und
einen Wellenlängendemultiplexer, der konfiguriert ist, das einkanalige optische Signal zu empfangen, das vom Wellenlängenmultiplexer eingegeben wird, das einkanalige optische Signal in M Kanäle optischer Signale aufzuteilen und in die entsprechenden M elektrischen Entzerrungsverarbeitungsvorrichtungen für ein optisches Signal ein zugeben.

**Revendications**

1. Procédé de traitement d'égalisation électrique pour un signal optique, comprenant les étapes suivantes :

diviser un signal optique d'entrée en N canaux de signaux optiques, où N est égal à 2 (401) ;
exécuter un filtrage passe-bande sur les N canaux de signaux optiques, où des fréquences centrales d'une bande de fréquences utilisée dans l'exécution du filtrage passe-bande sur les N canaux de signaux optiques ne sont pas exactement les mêmes,
et une bande passante de la bande de fréquences et une plage de spectre de fréquences des N canaux de signaux optiques se chevauchent (402), où une fréquence centrale du signal optique d'entrée est f0, et des fréquences centrales de bandes de fréquences utilisées dans l'exécution du filtrage passe-bande sur les N canaux de signaux optiques sont respectivement f1 et f2, où f1<f0<f2, et f1 et f2 sont symétriques par rapport à f0 ;
convertir les N canaux de signaux optiques sur lesquels un filtrage passe-bande est exécuté en N canaux de signaux électriques analogiques correspondants (403) ; et
exécuter un processus d'égalisation électrique sur les N canaux de signaux électriques analogiques pour délivrer en sortie un résultat de traitement d'égalisation électrique de signal optique (404).

2. Procédé selon la revendication 1, dans lequel l'exécution du processus d'égalisation électrique sur les N canaux de signaux électriques analogiques pour délivrer en sortie le résultat de traitement d'égalisation électrique de signal optique comprend les étapes suivantes :

convertir les N canaux de signaux électriques analogiques en N canaux de signaux électriques numériques correspondants ; et
exécuter une égalisation d'estimation de séquence de similitude maximale, MLSE, sur les N canaux de signaux électriques numériques, puis délivrer en sortie le résultat de traitement d'égalisation électrique de signal optique.

3. Procédé selon la revendication 2, dans lequel la conversion des N canaux de signaux électriques analogiques en les N canaux de signaux électriques numériques correspondants comprend les étapes suivantes :

échantillonner les N canaux de signaux électriques analogiques pour obtenir N canaux de signaux échantillonnés correspondants ; et
convertir les N canaux de signaux échantillonnés en les N canaux de signaux électriques numériques correspondants après avoir quantifié les N canaux de signaux échantillonnés.

4. Procédé selon la revendication 1, dans lequel l'exécution du processus d'égalisation électrique sur les N canaux de signaux électriques analogiques pour délivrer en sortie le résultat de traitement d'égalisation électrique de signal optique comprend les étapes suivantes :

exécuter un processus d'égalisation à précompensation, FFE, sur les N canaux de signaux électriques analogiques pour délivrer en sortie un résultat de traitement FFE ; et
exécuter un processus d'égalisation par retro-décision, DFE, sur le résultat de traitement FFE pour délivrer en sortie un résultat de traitement FFE/DFE.

5. Procédé selon l'une quelconque des revendications 1 à 4, dans lequel N est égal à 2, et des différences entre les fréquences centrales utilisées dans l'exécution d'un filtrage passe-bande sur les deux canaux divisés de signaux optiques et la fréquence centrale du signal optique d'entrée sont les mêmes en valeur absolue, et sont symétriques par rapport à la fréquence centrale du signal optique d'entrée.

6. Dispositif de traitement d'égalisation électrique pour un signal optique, comprenant :

une unité de division optique (710), configurée pour diviser un signal optique d'entrée en N canaux de signaux optiques, où N est égal à 2 ;

N unités de filtrage (720) correspondant aux N canaux de signaux optiques, configurées pour exécuter un filtrage passe-bande sur les signaux optiques correspondant aux N canaux de signaux optiques, où des fréquences centrales d'une bande de fréquences utilisée dans l'exécution d'un filtrage passe-bande sur les N canaux de signaux optiques ne sont pas les mêmes, et une bande passante de la bande de fréquences et une plage de spectre de fréquences des N canaux de signaux optiques se chevauchent, où une fréquence centrale du signal optique d'entrée est $f0$, et des fréquences centrales de bandes de fréquences utilisées dans l'exécution du filtrage passe-bande sur les N canaux de signaux optiques sont respectivement $f1$ et $f2$, où $f1 < f0 < f2$, et $f1$ et $f2$ sont symétriques par rapport à $f0$ ;

N unités de conversion optique/électrique (730) correspondant aux N canaux de signaux optiques filtrés sur lesquels un filtrage passe-bande est exécuté, configurée pour convertir de tels signaux optiques en N canaux de signaux électriques analogiques correspondants ; et

une unité de traitement d'égalisation électrique (740), configurée pour exécuter un processus d'égalisation électrique sur les N canaux de signaux électriques analogiques pour délivrer en sortie un résultat de traitement d'égalisation électrique de signal optique,

7. Dispositif selon la revendication 6, dans lequel l'unité de traitement d'égalisation électrique comprend :

N unités de conversion analogique à numérique correspondant aux N canaux du signal électrique analogique, configurées pour convertir les N canaux de signaux électriques analogiques en N canaux de signaux électriques numériques correspondants ; et

une unité de traitement numériques, configurée pour exécuter une égalisation d'estimation de séquence de similitude maximale, MLSE, sur les N canaux de signaux électriques numériques, et délivrer en sortie le résultat de traitement d'égalisation électrique de signal optique.

8. Dispositif selon la revendication 7, dans lequel les unités de conversion analogique à numérique comprennent :

une sous-unité d'échantillonnage, configurée pour échantillonner le signal électrique analogique correspondant pour obtenir des signaux échantillonnés correspondants ; et

une sous-unité de quantification, configurée pour quantifier les signaux échantillonnés et convertir les signaux échantillonnés quantifiés en signaux électriques numériques correspondants.

9. Dispositif selon la revendication 6, dans lequel l'unité de traitement d'égalisation électrique comprend :

une unité de traitement d'égalisation à précompensation, FFE, configurée pour exécuter un processus FFE sur les N canaux de signaux électriques analogiques et pour délivrer en sortie un résultat de traitement FFE ; et

une unité de traitement d'égalisation par retro-décision, DFE, configurée pour exécuter un processus DFE sur le résultat de traitement FFE et pour délivrer en sortie un résultat de traitement FFE/DFE.

10. Système de communication à fibre optique, comprenant un dispositif de traitement d'égalisation électrique pour un signal optique connecté à un émetteur en utilisant une liaison de transmission, où le dispositif de traitement d'égalisation électrique pour un signal optique est configuré pour :

recevoir un signal optique transmis depuis l'émetteur, et diviser le signal optique reçu en N canaux de signaux optiques, où N est égal à 2 ;

exécuter un filtrage passe-bande sur les N canaux de signaux optiques, où une bande passante d'une bande de fréquences utilisée dans l'exécution du filtrage passe-bande sur les N canaux de signaux optiques et une plage de spectre de fréquences des N canaux de signaux optiques se chevauchent, où une fréquence centrale du signal optique d'entrée est f0, et des fréquences centrales de bandes de fréquences utilisées dans l'exécution du filtrage passe-bande sur les N canaux de signaux optiques sont respectivement f1 et f2, où f1<f0<f2, et f1 et f2 sont symétriques par rapport à f0 ;

convertir les canaux de signaux optiques sur lesquels un filtrage passe-bande est exécuté en N canaux de signaux électriques analogiques correspondants ; et

exécuter un processus d'égalisation électrique sur les N canaux de signaux électriques analogiques pour délivrer en sortie un résultat de traitement d'égalisation électrique du signal optique.

11. Système de communication à fibre optique selon la revendication 10, dans lequel le système de communication à fibre optique comprend un dispositif de traitement d'égalisation électrique pour un signal optique, le système de communication à fibre optique comprend en outre :

un émetteur, configuré pour délivrer en sortie un signal optique au dispositif de traitement d'égalisation électrique pour un signal optique.

12. Système de communication à fibre optique selon la revendication 10, dans lequel le système de communication à fibre optique comprend M dispositifs de traitement d'égalisation électrique pour un signal optique, M étant un entier égal ou supérieur à 2 ; en conséquence, le système de communication à fibre optique comprend en outre :

M émetteurs, configurés pour délivrer en sortie les signaux optiques ;

une multiplexeur par répartition en longueur d'ondes, configuré pour recevoir M canaux de signaux optiques délivrés en sortie par les M émetteurs et pour multiplexer les M canaux de signaux optiques en un signal optique à canal unique, puis délivrer en sortie ; et

un démultiplexeur par répartition en longueur d'ondes, configuré pour recevoir le signal optique à canal unique délivré en entrée depuis le multiplexeur à répartition en longueur d'ondes, pour diviser le signal optique à canal unique en M canaux de signaux optiques puis délivrer en sortie aux M dispositifs de traitement d'égalisation électrique pour un signal optique correspondants.

FIG. 1

FIG. 2

FIG. 3

Split an input optical signal into N channels of optical signals ⌐ 401

Perform band-pass filtering on the split N channels of optical signals ⌐ 402

Convert the N channels of optical signals into corresponding N channels of analog electrical signals ⌐ 403

Perform an electrical equalizing process on the N channels of analog electrical signals to output an optical signal electrical equalizing processing result ⌐ 404

FIG. 4

```
┌─────────────────────────────────────┐
│ Split an input optical signal into N channels │ ──⌐ 501
│           of optical signal          │
└─────────────────────────────────────┘
                    │
                    ▼
┌─────────────────────────────────────┐
│ Perform band-pass filtering on the split N │ ──⌐ 502
│        channels of optical signals   │
└─────────────────────────────────────┘
                    │
                    ▼
┌─────────────────────────────────────┐
│ Convert the N channels of optical signals │
│ into corresponding N channels of analog │ ──⌐ 503
│           electrical signals         │
└─────────────────────────────────────┘
                    │
                    ▼
┌─────────────────────────────────────┐
│ Convert the N channels of analog electrical │
│ signals into corresponding N channels of │ ──⌐ 504
│         digital electrical signals   │
└─────────────────────────────────────┘
                    │
                    ▼
┌─────────────────────────────────────┐
│ Perform MLSE equalization on the N │
│ channels of digital electrical signals, and │ ──⌐ 505
│ then output an optical signal electrical │
│      equalizing processing result    │
└─────────────────────────────────────┘
```

FIG. 5

Split an input optical signal into N channels
of optical signals      601

Perform band-pass filtering on the split N
channels of optical signals      602

Convert the N channels of optical signals
into corresponding N channels of analog
electrical signals      603

Perform an FFE process on the N channels
of analog electrical signals      604

Perform a DFE equalizing process on the
FFE equalizing processing result to output
an FFE/DFE processing result      605

FIG. 6

FIG. 7

EP 2 360 859 B1

Input
—optical→
signal

| Optical splitting unit | ⟋810

⟋820 Filtering unit
⟋830 Optical/ electrical converting unit
⟋840 Analog-to- digital converting unit

Filtering unit
Optical/ electrical converting unit
Analog to digital converting unit

⟋850 Digital processing unit

Filtering unit
Optical/ electrical converting unit
Analog to digital converting unit

Equalizing
—Processing→
result

FIG. 8

FIG. 9

1010

1020

| Transmitter | Transmission link | Electrical equalizing processing device for optical signal |

FIG. 10

FIG. 11

EP 2 360 859 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070286612 A